Europäisches Patentamt

European Patent Office

Office européen des brevets

(19)

(11) Veröffentlichungsnummer: **0 050 813**
**B1**

(12) **EUROPÄISCHE PATENTSCHRIFT**

(45) Veröffentlichungstag der Patentschrift:
04.01.84

(21) Anmeldenummer: 81108423.5

(22) Anmeldetag: 16.10.81

(51) Int. Cl.³: **B 01 J 47/02,** B 01 J 49/02

(54) Gegenstrom-Adsorptionsfilter zur Behandlung von Flüssigkeiten und Verfahren zum Betreiben des Filters.

(30) Priorität: 29.10.80 DE 3040616

(43) Veröffentlichungstag der Anmeldung:
05.05.82 Patentblatt 82/18

(45) Bekanntmachung des Hinweises auf die Patenterteilung:
04.01.84 Patentblatt 84/1

(84) Benannte Vertragsstaaten:
AT BE CH DE FR GB IT LI NL SE

(56) Entgegenhaltungen:
CH - A - 591 882
DE - A - 1 642 848
DE - A - 1 923 723
DE - A - 2 137 796
GB - A - 730 068
GB - A - 1 228 366
US - A - 2 666 741
US - A - 3 136 719

(73) Patentinhaber: BAYER AG, Zentralbereich Patente, Marken und Lizenzen, D-5090 Leverkusen 1, Bayerwerk (DE)

(72) Erfinder: Martinola, Friedrich, Dr., Leopold-Gmelin-Strasse 16, D-5000 Köln 80 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen)

ACTORUM AG

# Gegenstrom-Adsorptionsfilter zur Behandlung von Flüssigkeiten und Verfahren zum Betreiben des Filters

Es sind bereits nach dem Gegenstromprinzip arbeitende Adsorptionsfilter und Verfahren zur Behandlung von Flüssigkeiten bekannt, bei denen das Beladen im aufwärts gerichteten Flüssigkeitsstrom und das Regenerieren der beladenen Adsorptionsmittel im abwärts gerichteten Flüssigkeitsstrom vorgenommen werden (s. z.B. deutsche Patentschrift 14 42 689). In diesen bekannten Adsorptionsfiltern werden jedoch nur dann zwei oder mehr Adsorptionsmittel verwendet, wenn diese mit dem gleichen Regeneriermittel regeneriert werden (s. z.B. VGB Kraftwerkstechnik 59 [1979], 1, 69/71).

Erfordert die Behandlung der Flüssigkeiten die Anwendung von zwei oder mehr Adsorptionsmitteln, die mit unterschiedlichen Regeneriermitteln regeneriert werden müssen, z.B. Anionen- und Kationenaustauschern bei der Vollentsalzung von Wasser, so werden die Adsorptionsmittel, die mit unterschiedlichen Regeneriermitteln regeneriert werden, in getrennte Adsorptionsfilter gefüllt und diese Filter hintereinenander geschaltet. Das heisst, die Verwendung mit unterschiedlichen Regeneriermitteln zu regenerierender Adsorbentien erfordert eine aus mehreren getrennten Filtern bestehende Anlage.

Solch eine Hintereinanderschaltung mehrerer Filter ist jedoch technisch sehr aufwendig. Es bestand deshalb das technische Problem, ein Adsorptionsfilter für das besagte Gegenstromverfahren zu schaffen, in dem verschiedene Adsorptionsmittel, die mit unterschiedlichen Regeneriermitteln regeneriert werden müssen, verwendet werden können und in dem diese verschiedenen Adsorptionsmittel nicht nur beladen sondern auch regeneriert werden können.

Aus der Mischbettfiltertechnik ist zwar die Anwendung verschiedener, unterschiedliche Regeneriermittel erfordernder Adsorptionsmittel innerhalb eines Filters bekannt (s. z.B. US-A-2 666 741 und FR-A-2 314 896). Diese Mischbettfilter werden jedoch nur im Gleichstrom, Beladen und Regenerieren im abwärts gerichteten Flüssigkeitsstrom, betrieben. In dem in Rede stehenden Gegenstrom-Verfahren sind Mischbetten, unabhängig davon, ob sie mit oder ohne Trennschichten arbeiten, nicht verwendbar, weil die bei der Beladung von Mischbetten vorliegenden innigen Gemische von Kationen- und Anionenaustauschern bzw. – bei Mischbetten mit Trennschicht – von Kationen – und Anionenaustauschern und Inertharzen, zum Regenerieren in ihre Komponenten aufgetrennt werden müssen. Diese Auftrennung führt zu einer vollständigen Umschichtung (Verwirbelung) des beim Beladen vorliegenden Adsorptionsmittel-Bettes. Gerade diese Umschichtung muss aber bei dem Gegenstrom-Verfahren vermieden werden. Das Gegenstrom-Verfahren erfordert, dass das beladene Adsorptionsmittel-Bett ohne Umschichtung regeneriert wird.

Ähnliches gilt für das in der EP-A-0 002 342 beschriebene Adsorptionsfilter. Auch in diesem werden verschiedene, mit unterschiedlichen Regeneriermitteln zu regenerierende Adsorptionsmittel verwendet. Die Vorrichtung wird für Adsorptionsverfahren empfohlen, bei denen Beladen und Regenerieren im abwärts gerichteten Flüssigkeitsstrom vorgenommen werden. Die Adsorptionsmittel werden zum Regenerieren aus dem Filter genommen. Wegen des Erfordernisses, die beladenen Adsorptionsmittel ausserhalb des Filters zu regenerieren, ist die Vorrichtung für das in Rede stehende Gegenstrom-Verfahren nicht verwendbar.

Gegenüber den Gegenstromfiltern weisen die Mischbettfilter den Nachteil langer Auswaschzeiten und erhöhten Regeneriermittelbedarfs auf.

Es wurde nun gefunden, dass man das Gegenstromverfahren, bei dem im aufwärts gerichteten Flüssigkeitsstrom beladen und im abwärts gerichteten Flüssigkeitsstrom regeneriert wird, auch unter Verwendung von Adsorptionsmitteln, die unterschiedliche Regeneriermittel erfordern, in einem Filter durchführen kann, wenn man das Adsorptionsfilter mittels horizontaler, flüssigkeitsdurchlässiger Vorrichtungen in so viele Kammern unterteilt, wie verschiedene Adsorptionsmittel im Filter verwendet werden sollen, die so erhaltenen Kammern, mit Ausnahme der obersten Kammer, mit einem Flüssigkeitsableitungssystem ausrüstet, das unter der flüssigkeitsdurchlässigen Vorrichtung angebracht und in eine Schicht aus Inertmaterial eingebettet ist und die Kammern mit bestimmten Mengen Adsorptionsmittel füllt.

Betreibt man ein solchermassen gebautes Adsorptionsfilter in der Weise, dass man es in der Beladungsphase von der zu behandelnden Flüssigkeit von unten nach oben durchströmen lässt und in der Regenerierphase die Adsorptionsmittel kammerweise regeneriert, indem man Regeneriermittel und Waschwasser von oben in die zu regenerierende Kammer einführt und das verbrauchte Regeneriermittel bzw. Waschwasser durch das Flüssigkeitsableitungssystem der darunter liegenden Kammer gleichzeitig mit einem von unten nach oben durch die darunterliegende Kammer geleiteten, dem Regeneriermittel- bzw. Waschwasserstrom entgegengesetzten Wasserstrom abzieht, so gelingt es, den vollen Betriebsablauf des Gegenstromverfahrens, d.h. Beladen und Regenerieren, unter Verwendung unterschiedlicher Regeneriermittel erfordernder Adsorptionsmittel in ein und demselben Filterkörper durchzuführen.

Die Erfindung betrifft daher ein Gegenstrom-Adsorptionsfilter zur Behandlung von Flüssigkeiten mit verschiedenen, unterschiedliche Regeneriermittel erfordernden Adsorptionsmitteln, in dem das Beladen der verschiedenen Adsorptionsmittel im aufwärts gerichteten Flüssigkeitsstrom und das Regenerieren der verschiedenen beladenen Adsorptionsmittel mit den unterschiedlichen Regeneriermitteln im abwärts gerichteten Flüssigkeitsstrom erfolgt; das Adsorptionsfilter ist dadurch gekennzeichnet,

a) dass der Innenraum des Filters durch horizontale, flüssigkeitsdurchlässige Vorrichtungen in eine der Anzahl der zu verwendenden verschiedenen Adsorptionsmittel entsprechende Zahl von Kammern unterteilt ist;
b) dass sich in aneinandergrenzenden Kammern Adsorptionsmittel befinden, die mit unterschiedlichen Regeneriermitteln regeneriert werden;
c) dass die Kammern – mit Ausnahme der obersten Kammer des Filters – mit einem Flüssigkeitsableitungssystem ausgerüstet sind, das unter der die Kammer nach oben begrenzenden flüssigkeitsdurchlässigen Vorrichtung angebracht und in eine Schicht aus Inertmaterial eingebettet ist; und
d) dass die Menge an Adsorptionsmittel (in Vol.-%) in den einzelnen Kammern 50 bis 98, vorzugsweise 60 bis 95, besonders bevorzugt 75 bis 95% des freien Kammervolumens beträgt.

Die Erfindung betrifft ferner ein Verfahren zum Betreiben des erfindungsgemässen Gegenstrom-Adsorptionsfilters; das Verfahren ist dadurch gekennzeichnet, dass man in der Beladungsphase den zu behandelnden Flüssigkeitsstrom von unten nach oben durch die mit den verschiedenen Adsorptionsmitteln gefüllten, übereinander angeordneten Kammern des Filters leitet und anschliessend in der Regenerierphase die beladenen Adsorptionsmittel kammerweise in der Weise regeneriert, dass man Regeneriermittel und Waschwasser von oben in die Kammer, deren Adsorptionsmittel regeneriert werden soll, einleitet und verbrauchtes Regeneriermittel bzw. Waschwasser durch das Flüssigkeitsableitungssystem der darunterliegenden Kammer gleichzeitig mit einem von unten nach oben durch eben diese darunterliegende Kammer geleiteten, dem Regeneriermittel- bzw. Waschwasserstrom entgegengerichteten Wasserstrom abzieht.

Für die Verwendung in den erfindungsgemässen Adsorptionsfiltern bzw. für die Verwendung in dem erfindungsgemässen Gegenstromverfahren eignen sich nicht-ionogene Adsorptionsmittel, z.B. Aktivkohle oder synthetische Adsorberharze, wie sie beispielsweise in der US-Patentschrift 35 31 143 beschrieben sind, und vor allem Ionenaustauscher.

Diese verschiedenen Adsorptionsmittel können in den erfindungsgemässen Adsorptionsfiltern in den verschiedensten Kombinationen eingesetzt werden. Zur Erläuterung seien folgende Kombinationen genannt: (die Reihenfolge, in der die Adsorptionsmittel in den nachstehenden Kombinationen aufgeführt sind, entspricht der Reihenfolge, in der die Adsorptionsmittel im Filter aufeinanderfolgen. Das in den Kombinationen zuerst genannte Adsorptionsmittel befindet sich in der untersten, das zuletzt genannte in der obersten Kammer des Filters.)

Zweierkombinationen:

a) Kationenaustauscher-Anionenaustauscher
b) Anionenaustauscher-Kationenaustauscher
c) schwachsaurer Kationenaustauscher/starksaurer Kationenaustauscher-schwachbasischer Anionenaustauscher/starkbasischer Anionenaustauscher

Dreierkombinationen:

a) Adsorberharz (Regeneriermittel: verdünnte NaOH)-Kationenaustauscher-Anionenaustauscher
b) Kationenaustauscher-Adsorberharz (Regeneriermittel: 10%ige Kochsalzlösung)-Anionenaustauscher
c) Kationenaustauscher-Anionenaustauscher-Kationenaustauscher
d) Anionenaustauscher-Kationenaustauscher-Anionenaustauscher

Viererkombinationen:

a) Kationenaustauscher-Anionenaustauscher-Kationenaustauscher-Anionenaustauscher

Die Zweierkombination c) erläutert den Fall, dass anstelle eines Kationen- und eines Anionenaustauschers ein stark- und ein schwachsaurer Kationen- und ein stark- und ein schwachbasischer Anionenaustauscher eingesetzt werden. Starksaurer und schwachsaurer Kationen- und starkbasischer und schwachbasischer Anionenaustauscher werden zwar in getrennten, übereinanderliegenden Kammern untergebracht, da beide Kationenaustauscher einerseits und die beiden Anionenaustauscher andererseits aber mit gleichen Regeneriermitteln regeneriert werden, befindet sich nur in der Kammer mit den starksauren Kationenaustauschern ein in die Inertmaterialschicht eingebettetes Drainagesystem, da nur diese Kammer unter einer mit einem anderen Regeneriermittel zu regenerierenden Kammer liegt.

Unter flüssigkeitsdurchlässigen Vorrichtungen sind im Rahmen der erfindungsgemässen Adsorptionsfilter in der Adsorptions-Filtertechnik bekannte, mit Öffnungen (z.B. Düsen oder Schlitzen) versehene Platten (Düsenböden, Schlitzböden) oder Netze zu verstehen, die für die Flüssigkeit, nicht jedoch für das Adsorptionsmittel durchlässig sind.

Unter Flüssigkeitsableitungssystemen sind im Rahmen der erfindungsgemässen Filter die aus der Adsorptions-Filtertechnik bekannten, z.B. aus perforierten Rohrleitungen aufgebauten Drainagesysteme zu verstehen. Diese Drainagesysteme werden in möglichst geringem Abstand unter der flüssigkeitsdurchlässigen Vorrichtung angebracht. Der Abstand wird im wesentlichen durch die Dicke der Drainage-Rohre bestimmt. Vorteilhaft befinden sich die Drainagesysteme im obersten Fünftel, vorzugsweise im obersten Siebtel der betreffenden Kammer.

Das Drainagesystem ist in eine Schicht aus Inertmaterial eingebettet. Die Dicke der Inertmaterialschicht wird durch die Dicke des Drainagesystems bestimmt. Je dicker das Drainagesystem, umso dicker auch die Schicht aus Inertmaterial, damit das Drainagesystem eingebettet ist. Im allgemeinen betragen die Dicken der Inertmaterialschicht 60 bis 600 mm, vorzugsweise 100 bis 300 mm. Für die Inertmaterialschicht eignen sich solche Materialien, die inert sind gegen die aufzubereitenden Flüssigkeiten, die Regeneriermittel und die Waschlösungen, d.h. Materialien die mit diesen Medien nicht reagieren.

Die Inertmaterialien sollen eine Dichte aufweisen, die geringer ist als jede der Flüssigkeiten, mit denen sie in Berührung kommen; d.h. sie sollen auf den sie durchströmenden Flüssigkeiten schwimmen. Vorzugsweise werden die Inertmaterialien in granulierter Form angewendet. Bewährt haben sich z.B. organische synthetische Materialien wie Polyethylen, Polypropylen und Polystyrol. Die Korngrösse der Granulate sollte vorteilhaft etwa 0,2 bis 2,0 mm betragen.

Unter dem «freien Kammervolumen» ist im Rahmen der Erfindung das um das Volumen von Inertmaterial + Flüssigkeitsableitungssystem verringerte Kammervolumen zu verstehen. Da die oberste Kammer des Filters kein Flüssigkeitsableitungssystem enthält, ist bei dieser obersten Kammer das freie Kammervolumen gleich dem Kammervolumen.

Damit die in den beanspruchten Gegenstromfiltern befindlichen Adsorptionsmittel beim Beladen im Aufstrom ihre volle Wirkung entfalten, ist es erforderlich, dass ein Teil der Adsorptionsmittel, und zwar mindestens 25% der Adsorptionsmittel (Vol.-% bezogen auf das Adsorptionsmittelvolumen) bei den üblicherweise angewendeten Strömungsgeschwindigkeiten der zu behandelnden Flüssigkeiten von 5 bis 500 m/h ein Festbett an der Inertmaterialschicht bildet. Mit den anspruchsgemäss in den Kammern zu verwendenden Adsorptionsmittelmengen von 50 bis 98, vorzugsweise 60 bis 95, besonders bevorzugt 75 bis 95 Vol.-% des freien Kammervolumens wird unter den angegebenen Strömungsgeschwindigkeiten ein Adsorptionsmittel-Bett mit dem gewünschten Festbettanteil von mindestens 25% erhalten.

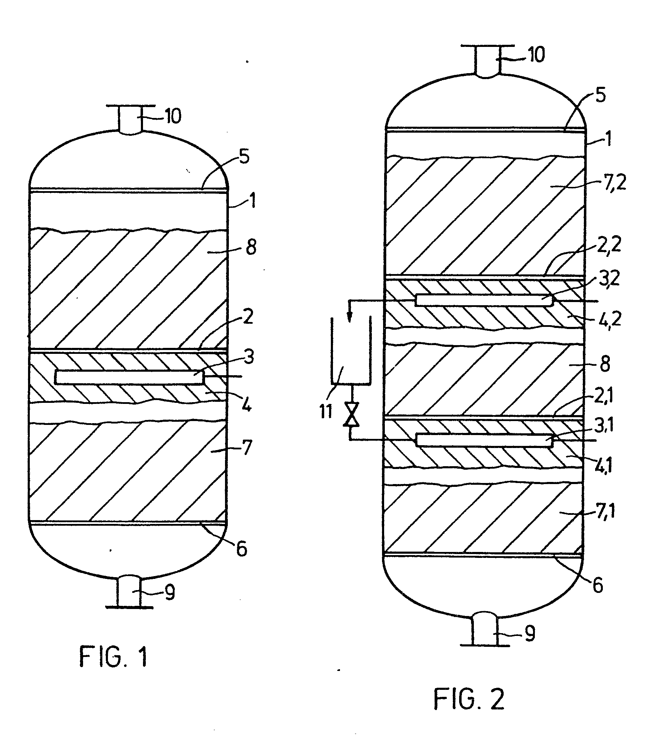

Das Prinzip der erfindungsgemässen Adsorptionsfilter und ihre Arbeitsweise sei anhand des in Fig. 1 wiedergegebenen Zweikammer-Adsorptionsfilters erläutert.

Eine Filtersäule 1 ist durch eine flüssigkeitsdurchlässige Vorrichtung (Düsenboden) 2 in zwei Kammern geteilt. Unmittelbar unter dem Düsenboden 2 befindet sich das Flüssigkeitsableitungssystem (Drainage) 3, durch welches Flüssigkeiten zu- und abgeführt werden können, ohne dass Adsorptionsmittelteilchen austreten. Die Drainage 3 ist in eine Inertmaterialschicht 4 eingebettet. Das Inertmaterial gestattet den Durchtritt der verschiedenen Flüssigkeiten, hält jedoch die Adsorptionsmittelteilchen von der Drainage fern. Den unteren und oberen Abschluss des Filterraumes bilden die flüssigkeitsdurchlässigen Vorrichtungen (Düsenböden) 5 und 6. Die Menge an Kationenaustauscher 7 in der unteren Kammer beträgt etwa 75% des freien Kammervolumens, die Menge an Anionenaustauscher 8 in der oberen Kammer etwa 60% des Kammervolumens. Der Kationenaustauscher liegt vor dem Beladen in der H-Form, der Anionenaustauscher in der OH-Form vor. Zum Behandeln von Flüssigkeiten, z.B. Entsalzen von Rohwasser, wird dieses von unten durch Rohr 9 in die Filtersäule 1 eingeführt, durchströmt die beiden Austauscherkammern und tritt am oberen Ende der Filtersäule durch Rohr 10 aus.

Nachdem die beiden Ionenaustauscher erschöpft sind, werden sie regeneriert. Die Regenerierung wird kammerweise vorgenommen, und zwar wird zunächst die Regenerierlösung für den Anionenaustauscher 8, verdünnte Natronlauge, über Rohr 10 in die obere Kammer eingespeist und das ablaufende Regeneriermittel an der Drainage 3 abgezogen. Gleichzeitig mit der Regeneriermittellösung strömt durch Rohr 9 Rohwasser von unten durch den Kationenaustauscher 7 und tritt gemeinsam mit der ablaufenden Regenerierlösung der oberen Kammer an der Drainage 3 aus. Die Strömungsgeschwindigkeit des dem Regeneriermittel in der unteren Kammer entgegengeleiteten Wassers wird so eingestellt, dass unterhalb der Inertmaterialschicht 4 keine Schlieren sichtbar sind. Diese Schlierenfreiheit lässt sich bereits mit einer Strömungsgeschwindigkeit von etwa 1 m/h erreichen.

Anschliessend an das Regenerieren wird die Regenerierlösung aus dem Anionenaustauscher 8 durch Einleiten von Wasser entsprechender Reinheit über Rohr 10 verdrängt. Auch während dieses Auswaschens strömt Wasser von unten durch Rohr 9 mit der einmal eingestellten Geschwindigkeit.

Sobald der Anionenaustauscher 8 ausgewaschen ist, wird der Kationenaustauscher 7 regeneriert. Die Regenerierlösung (verdünnte Salzsäure) wird durch die Drainage 3 in die Kammer geleitet und nach Durchströmen des Austauscherbettes durch Rohr 9 abgezogen. Zum Auswaschen des Kationenaustauschers 7 schickt man durch die Drainage 3 Wasser entsprechender Reinheit. Sobald genügend ausgewaschen ist, ist das Filter zur erneuten Beladung betriebsbereit.

Die Regenerierung der beiden Kammern muss nicht in der beschriebenen Reihenfolge – zuerst obere Kammer, dann untere Kammer – erfolgen, sondern kann auch in der umgekehrten Reihenfolge – zuerst untere, dann obere Kammer vorgenommen werden. Wesentlich ist lediglich, dass während des Regenerierens des in der oberen Kammer befindlichen Adsorptionsmittels die Regenerierlösung so zu- und abgeführt wird, dass das in der darunterliegenden Kammer befindliche Adsorptionsmittel nicht mit ihr in Berührung kommt. Dies wird erfindungsgemäss dadurch erreicht, dass die aus der Kammer ablaufenden Regeneriermittellösungen und Waschwässer durch die in der darunter befindlichen Kammer angebrachte Drainage gleichzeitig mit einem durch die untere Kammer entgegengeleiteten Wasserstrom abgezogen werden. Durch das Zusammenwirken dieser erfindungsgemässen Massnahmen, Anbringen eines in eine Inertmaterialschicht eingebetteten Flüssigkeitsableitungssystem am oberen Ende der unteren Kammer und gemeinsames Ableiten der aus der oberen Kammer ablaufenden Regeneriermittellösungen bzw. Waschwässer und eines aus der unteren Kammer dem verbrauchten Regeneriermittel bzw. Waschwasser entgegengerichteten Wasserstroms wird ein einwandfreies Regenerieren der in der oberen Kammer befindlichen Adsorptionsmittel erreicht, ohne dass das in der unteren Kammer befindliche Adsorptionsmittel mit dem Regeneriermittel oder Waschwasser aus der oberen Kammer in Berührung kommt; d.h. die erfindungsgemässen Massnahmen ermöglichen das Regenerieren von zwei verschiedenen, mit unterschiedlichen Regeneriermitteln zu regenerierenden, in aneinandergrenzenden Kammern untergebrachten Adsorptionsmitteln.

Befinden sich in aneinandergrenzenden Kammern verschiedene Adsorptionsmittel, die jedoch mit demselben Regeneriermittel behandelt werden, so werden diese Kammern nacheinander von dem in die obere Kammer eingespeisten Regeneriermittel durchflossen, ohne dass zwischendurch das Regeneriermittel abgezogen wird. Beispiele für verschiedene Adsorptionsmittel, die jedoch mit dem selben Regeneriermittel regeneriert werden, sind schwach- und starksaure Kationenaustauscher oder schwach- und starkbasische Anionenaustauscher.

In der Wasseraufbereitung ist es häufig erforderlich, dass das aufbereitete Wasser die verschiedenen Adsorptionsmittel in einer bestimmten Reihenfolge durchströmt, damit die gewünschte Wirkung der Adsorptionsmittel erreicht wird. Infolgedessen lassen sich häufig verschiedene Adsorptionsmittel, die jedoch mit dem gleichen Regeneriermittel regeneriert werden, nicht in aufeinanderfolgenden Kammern anordnen, sondern man ist gezwungen, zwischen die Kammern mit diesen Adsorptionsmitteln Kammern zwischenzuschalten, die Adsorptionsmittel enthalten, die andere Regeneriermittel erfordern. Solche Hintereinanderschaltungen verschiedener Adsorptionsmittel lassen sich in den erfindungsgemässen Gegenstromadsorptionsfiltern einfach und wirtschaftlich ausführen. Das Prinzip einer solchen Hintereinanderschaltung verschiedener, teils mit den gleichen, teils mit unterschiedlichen Regeneriermitteln zu regenerierender Adsorptionsmittel sei an dem in Fig. 2 wiedergegebenen Dreikammerfilter erläutert.

Die Filtersäule 1 ist durch zwei Düsenböden 2.1 und 2.2 in drei Kammern geteilt. Unter diesen Düsenböden 2.1 und 2.2 befinden sich je eine Drainage 3.1 und 3.2. Die Drainagen 3.1 und 3.2 sind in Inertmaterialschichten 4.1 und 4.2 eingebettet. Bei 7.1 und 7.2 handelt es sich um mit demselben Regeneriermittel zu regenerierende Kationenaustauscher, bei 8 um einen Anionenaustauscher.

Die Beladung der Adsorptionsmittel 7.1, 8 und 7.2 erfolgt durch Einleiten des Rohwassers durch Rohr 9. Das entsalzte Wasser wird am Kopf des Filters durch Rohr 10 entnommen.

Nach beendeter Beladung werden die Adsorptionsmittel in den drei Kammern wie folgt regeneriert:

Die Regeneriermittellösung wird zuerst in die oberste Kammer eingeleitet, regeneriert dort den Kationenaustauscher 7.2 und wird zusammen mit dem von unten über die Drainage 3.1 oder Rohr 9 entgegengeleiteten Wasserstrom durch Drainage 3.2 abgeführt und im Zwischenbehälter 11 aufgefangen. Anschliessend wird das Regeneriermittel aus 7.2 ausgewaschen, ebenfalls unter Entgegenleiten eines Wasserstroms durch Drainage 3.1 oder Rohr 9. Auch dieses Waschwasser wird gesondert aufgefangen.

Anschliessend wird der in der mittleren Kammer befindliche Anionenaustauscher 8 in der für den Anionenaustauscher 8 von Fig. 1 beschriebenen Weise regeneriert und ausgewaschen. Nachdem auch das in der mittleren Kammer befindliche Adsorptionsmittel wieder betriebsbereit ist, wird der in der untersten Kammer befindliche Kationenaustauscher 7.1 regeneriert. Und zwar wird zur Regenerierung das im Behälter 11 aufgefangene, nur z.T. verbrauchte Regeneriermittel verwendet. Dieses Regeneriermittel wird über die Drainage 3.1 in die Kammer eingeleitet und durch Rohr 9 abgezogen. Nach beendeter Regenerierung wird das Regeneriermittel zunächst durch das beim Auswaschen des Kationenaustauschers 7.2 angefallene Waschwasser, dann durch reines Wasser, verdrängt. Das Waschwasser wird, wie das Regeneriermittel, durch die Drainage 3.1 eingeleitet und durch Rohr 9 abgezogen.

Durch die Wiederverwendung der bei der Regenerierung des Kationenaustauschers 7.2 ablaufenden Regeneriermittellösung und des Waschwassers wird eine maximale Ausnutzung des Regeneriermittels erreicht. Diese Verbundregenerierung lässt sich grundsätzlich auf alle Adsorptionsmittel anwenden.

Die erfindungsgemässen Filter eröffnen erstmals die Möglichkeit, in einem Gegenstrom-Adsorptionsfilter, bei dem Beladen im Aufwärts- und Regenerieren im Abwärtsstrom erfolgen, beliebige Adsorptionsmittelkombinationen einzusetzen. Durch Wahl entsprechender Adsorptionsmittel-Kombinationen lässt sich mit den erfindungsgemässen Filtern jeder beliebige Reinheitsgrad einer zu behandelnden Lösung erreichen. Darüber hinaus weisen die erfindungsgemässen Filter noch die Vorteile auf, dass sie nur einen geringen Platzbedarf haben, Einsparungen an Ventilen und Rohrleitungen ermöglichen sowie bei ihrem Betrieb nur einen geringen Druckverlust aufweisen, da infolge des Fortfalls von Verbindungsleitungen und Ventilen Verengungen fehlen. Ausserdem ermöglichen sie eine wirtschaftliche Verbundregenerierung und damit eine erhebliche Einsparung an Regenerierchemikalien und Waschwasser.

Beispiel 1

Es wird ein gemäss Fig. 1 gebautes Adsorptionsfilter verwendet. Das Filter 1 weist eine lichte Weite von 190 mm und eine zylindrische Mantelhöhe von 1200 mm auf. Es weist einen oberen 5, unteren 6 und mittleren Düsenboden 2 und eine Drainage 3 auf. Der Abstand der Düsenböden 6 und 2 beträgt 610 mm, der Abstand der Düsenböden 2 und 5 475 mm. Die Volumina der beiden Kammern betragen 17,3 l (untere Kammer) und 13,5 l (obere Kammer). Der mittlere Abstand der Drainage 3 vom mittleren Düsenboden 2 beträgt 80 mm. Die Drainage 3 ist in eine Schicht 4 aus Polyethylen-Granulat (Korngrösse 1 bis 2 mm) eingebettet. Die Dicke der Inertmaterialschicht beträgt 150 mm, das freie Volumen der unteren Kammer 13 l. Die untere Kammer ist mit 11,6 l (= 89% des freien Kammervolumens) eines starksauren Kationenaustauschers gefüllt. Der Freiraum zwischen Oberkante Ionenaustauscherbett und Inertmaterialschicht beträgt 50 mm. Die obere Kammer ist mit 11,2 l (= 83% des Kammervolumens) eines starkbasischen Anionenaustauschers gefüllt. Der Freiraum zwischen der Oberkante des Ionenaustauscherbettes und dem Düsenboden 5 beträgt 80 mm.

Um das Filter betriebsbereit zu machen, werden die Ionenaustauscher zunächst regeneriert. Zu diesem Zweck werden innerhalb von 20 Minuten 18,5 l 3%ige Natronlauge durch Rohr 10 über den Anionenaustauscher geleitet und durch die Drainage 3 gleichzeitig mit dem durch Rohr 9 entgegengeleiteten Wasser abgezogen (Strömungsgeschwindigkeit des durch Rohr 9 entgegengeleiteten Wassers: 55 l/h). Durch das entgegengeleitete Wasser wird die Kationenaustauschermasse bis fast zur Inertmaterialschicht 4 angehoben. Der verbleibende Freiraum wird auf Schlierenfreiheit beobachtet. Nach Zugabe der Regenerierlauge wird diese durch Einleiten von entsalztem Wasser durch Rohr 10 verdrängt. Das ablaufende Waschwasser wird mit dem auch während des Waschens durch Rohr 9 entgegengeleiteten Wasser durch die Drainage 3 abgezogen. Nach Durchleiten von 50 l Waschwasser beträgt die Säurekapazität der bei 3 ausfliessenden Lösung nur noch 0,1 mmol/l. Das Waschen wird daraufhin beendet.

Anschliessend wird der Kationenaustauscher regeneriert, indem 9,6 l 6%ige Salzsäure innerhalb von 16 Minuten durch Drainage 3 eingeleitet werden. Das verbrauchte Regeneriermittel fliesst durch Rohr 9 ab. Zum Verdrängen der Regenierlösung werden 22 l entsalztes Wasser innerhalb von 19 Minuten durch die Drainage 3 eingeleitet. Dann weist die bei 9 austretende Flüssigkeit nur noch eine Base-Kapazität von 3,5 mmol/l auf. Das Waschen wird daraufhin beendet.

Das auf diese Weise betriebsbereit gemachte Filter wird zur Entsalzung von Trinkwasser verwendet. Das Trinkwasser wird mit einer Geschwindigkeit von 300 l/h durch Rohr 9 eingeleitet. Das entsalzte Wasser tritt durch Rohr 10 aus. Der Filterlauf wird abgebrochen, wenn der Kieselsäurewert im behandelten Wasser auf 0,1 mg $SiO_2$/l angestiegen ist. Dies ist nach einem Durchsatz von 780 l Trinkwasser der Fall.

Die durchschnittliche Leitfähigkeit des entsalzten Wassers beträgt 3,5 Mikrosiemens/cm. Der Gesamtsalzgehalt des zur Beladung verwendeten Trinkwassers beträgt einschliesslich Kieselsäure 10,2 mmol Austauschäquivalente/l. Daraus folgt, dass bei dem Filterlauf eine nutzbare Kapazität des Anionenaustauschers von 0,710 Austauschäquivalenten pro l Harz erzielt wird.

Vergleichsversuche:

a) Verzichtet man auf ein Einbetten der Drainage 3 in das Inertmaterial und füllt stattdessen 15,8 l Kationenaustauscher in die untere Kammer, dann steigt während des Regenerierens des Anionenaustauschers Kationenaustauscher bis zur Drainage. Dies hat zur Folge, dass bei der an die Regenerierung der Harze anschliessenden Beladung mit Frischwasser im entsalzten Wasser nur eine Leitfähigkeit von 55 Mikrosiemens/cm erzielt werden kann. Der Restkieselsäurewert schwankt dann zwischen 0,12 und 0,25 mg $SiO_2$/l.

Wird während des Regenerierens und Auswaschens des Anionenaustauschers der durch Rohr 9 entgegengeleitete Wasserstrom so langsam eingeleitet, dass im Freiraum Schlieren auftreten, so wird bei der nachfolgenden Entsalzung des Trinkwassers nur eine Leitfähigkeit im entsalzten Wasser von 35 Mikrosiemens/cm erreicht.

b) In dem verwendeten Filter wird der Düsenboden 2 entfernt und das Poylethylen-Granulat durch ein Harz-Granulat ersetzt, dessen spezifisches Gewicht zwischen dem spezifischen Gewicht des Kationenaustauschers und dem des Anionenaustauschers liegt. Das Filter wird in der Weise gefüllt, dass auf den unteren Boden 14,3 l Kationenaustauscher, darauf 4,0 l Harz-Granulat und darüber 11,2 l Anionenaustauscher geschichtet werden. Drainage 3 ist in das inerte Harzmaterial eingebettet. Über dem Anionenaustauscher befindet sich ein Freiraum von 1000 mm, wie er zum Rückspülen und gleichzeitigen Trennen von gemischten Ionenaustauschern in einem Mischbettfilter gebraucht wird.

Das Regenerieren und das Auswaschen des Anionenaustauschers und des Kationenaustauschers werden mit den vorstehend beschriebenen Mengen Regeneriermittel und Waschwasser und unter Einhaltung der angegebenen Strömungsgeschwindigkeiten ausgeführt. Danach wird mit Trinkwasser beladen, indem eine Menge von 300 l/h durch Rohr 9 von unten nach oben einleitet. Dabei nimmt das Harzvolumen um 60% zu. Ausserdem tritt eine Verwirbelung und Vermischung der drei verschiedenen Materialien ein.

Die durchschnittliche Leitfähigkeit des Wassers beim Austreten durch Rohr 10 beträgt 215 Mikrosiemens/cm, die Restkieselsäure 0,55 mg

SiO₂/l. Die Menge an entsalztem Wasser, die bis zum Anstieg der Restkieselsäure auf 1 mg SiO₂/l durchgeleitet werden kann, beträgt 510 l entsprechend einer nutzbaren Kapazität des Anionenaustauschers von 0,46 Austauschäquivalenten pro l Harz.

Beispiel 2

Das in Beispiel 1 beschriebene erfindungsgemässe Filter wird zur Vollentsalzung eines teilentsalzten Wassers verwendet. Zusammensetzung des teilentsalzten Wassers:

| | |
|---|---|
| Erdalkalien | 0 |
| Natrium | 3 mg/l |
| Chlorid | 5 mg/l |
| Sulfat | 0 |
| Kohlensäure (CO₂) | 22 mg/l |
| Kieselsäure (SiO₂) | 12 mg/l |
| pH-Wert | 5,5 |
| Leitfähigkeit | 25 Mikrosiemens/cm |

Das teilentsalzte Wasser wird mit einer Geschwindigkeit von 500 l/h durch Rohr 9 in das regenerierte Filter eingeleitet. Das durch Rohr 10 austretende vollentsalzte Wasser weist folgende Werte auf:

| | |
|---|---|
| Natrium | 0,03 mg/l |
| Chlorid, Sulfat, Kohlensäure | 0 |
| Kieselsäure (SiO₂) | 0,01 mg/l |
| pH-Wert | 7,1 |
| Leitfähigkeit | 0,12 Mikrosiemens/cm |

Um mit einem Mischbettfilter, das die gleichen Harzmengen und Harztypen enthält, ein Wasser gleicher Reinheit zu erzeugen, sind als Regeneriermittel 28 l 4%ige Natronlauge und 19,2 l 6%ige Salzsäure notwendig. Ausserdem werden 305 l Wasser zum Trennen der Harze, zum Verdrängen der Regeneriermittel und zum Auswaschen nach dem Mischen benötigt. Das heisst, das Mischbettfilter erfordert einen um 100% höheren Regeneriermittelüberschuss als das erfindungsgemässe Filter. Ferner ist der Waschwasserbedarf des Mischbettfilters um 320% höher als der des erfindungsgemässen Filters.

Beispiel 3

Das in Beispiel 1 beschriebene erfindungsgemässe Filter wird zur Entsalzung eines Kondensates verwendet. Das Kondensat weist folgende Werte auf:

| | |
|---|---|
| Eisen (Fe) | 0,022 mg/l |
| Natrium | 0,012 mg/l |
| Ammoniak (NH₃) | 0,85 mg/l |
| Kieselsäure (SiO₂) | 0,02 mg/l |
| pH-Wert | 9,2 |
| Leitfähigkeit | 5,2 Mikrosiemens/cm |
| Temperatur | 42°C |

Das Kondensat wurde mit einer Geschwindigkeit von 750 l/h durch das Filter geleitet.

Zum Regenerieren der beladenen Austauscher werden die in Beispiel 1 angegebenen Regeneriermittelmengen verwendet. Der Waschwasserverbrauch beträgt 105 l, wobei 2 Stunden umgepumpt wurde.

Das aus dem Filter austretende Wasser weist folgende Werte auf:

| | |
|---|---|
| Eisen | 0,002 mg/l |
| Natrium | 0,003 mg/l |
| Ammoniak (NH₃) | 0,012 mg/l |
| Kieselsäure (SiO₂) | 0,006 mg/l |
| pH-Wert | 7,3 |
| Leitfähigkeit | 0,09 Mikrosiemens/cm |

Um mit einem Mischbettfilter üblicher Bauart und interner Regenerierung, das die gleichen Harzmengen und Harztypen enthält, ein Wasser gleicher Reinheit zu erzeugen, benötigt man die doppelte Menge an Regeneriermittel und mindestens die dreifache Waschwassermenge, auch wenn diese wie in dem erfindungsgemässen Filter umgepumpt wird.

Beispiel 4

Es wird das in Beispiel 1 beschriebene Filter verwendet, nur wird in diesem jetzt der Kationenaustauscher in der oberen, der Anionenaustauscher in der unteren Kammer angeordnet. Das Filter wird mit den in Beispiel 1 angegebenen Mengen an Regeneriermittel (Salzsäure und Natronlauge) und Waschwasser betriebsbereit gemacht. Die Regenerierung wird in diesem Fall mit dem in der oberen Kammer befindlichen Kationenaustauscher begonnen. Die Salzsäurelösung wird durch Rohr 10 eingeleitet und gleichzeitig mit dem durch Rohr 9 entgegengeleiteten Wasserstrom durch die Drainage 3 abgezogen. Im übrigen wird wie in Beispiel 1 beschrieben verfahren.

Das regenerierte Filter wird zur Reinigung des im Beispiel 3 beschriebenen Kondensates verwendet. Dieses Kondensat wird mit einer Geschwindigkeit von 750 l/h durch das Filter geleitet. Das bei Rohr 10 entnommene Reinkondensat weist einen Restgehalt an Natrium von 0,001 mg/l auf. Bis zur Erschöpfung des Kationenaustauschers können 268 m³ Kondensat durchgesetzt werden (Dauer: 14 Tage).

Ein vergleichbares Mischbettfilter ist bereits nach einem Durchsatz von 150 m³ Kondensat erschöpft und benötigt zum Regenerieren die doppelte Menge an Regeneriermittel.

Beispiel 5

Es wird ein gemäss Fig. 2 gebautes Filter verwendet. Das Filter 1 weist eine lichte Weite von 190 mm und eine zylindrische Mantelhöhe von 1800 mm auf. Das Filter ist mit einem oberen Düsenboden 5, einem unteren Düsenboden 6 und zwei mittleren Düsenböden 2.2 und 2.1 und zwei Drainagen 3.2 und 3.1 ausgestattet. Der Abstand zwischen den Düsenböden 6 und 2.1 beträgt 610 mm, zwischen den Düsenböden 2.1 und 2.2 625 mm und zwischen den Düsenböden 2.2 und 5 330 mm. Die Volumina der drei Kammern betragen: Unter Kammer 17,3 l; mittlere Kammer 17,7 l; obere Kammer 9,4 l. Der mittlere Abstand der Drainagen 3.2 und 3.1 vom jeweiligen Düsenboden 2.2 bzw. 2.1 beträgt 80 mm. Die beiden Drainagen 3.2 und 3.1 sind in die Schichten 4.1 und 4.2 aus granuliertem Polyethylen (Korngrösse: 0,8–2 mm) eingebettet. Die Dicke der Inertmaterialschichten beträgt 150 mm, das freie Volumen der unteren Kammer 13 l und der mittleren Kammer 13,5 l. Die unterste Kammer ist mit 11,6 l, die oberste Kammer mit 8 l des gleichen starksauren Kationenaustauschers gefüllt. Die mittlere Kammer enthält 11,2 l eines starkbasischen Anionenaustauschers.

Zum Betriebsbereitmachen des Filters werden die Ionenaustauscher zunächst regeneriert. Zu diesem Zweck werde zunächst der Anionenaustauscher mit 18,5 l 3%iger Natronlauge regeneriert. Die Natronlauge wird durch die Drainage 3.2 eingeleitet. Das ablaufende Regeneriermittel wird zusammen mit dem durch Rohr 9 durch die untere Kammer entgegengeleiteten Wasserstrom (Strömungsgeschwindigkeit 55 l/h) durch die Drainage 3.1 abgezogen. Nach dem Auswaschen der Regenerierlauge in der in Beispiel 1 beschriebenen Weise wird der Kationenaustauscher 7.2 mit 7 l 9%iger Salzsäure regeneriert. Diese Salzsäure wird durch Rohr 10 eingeleitet und zusammen mit dem durch die Drainage 3.1 oder Rohr 9 entgegengeleiteten Wasserstrom (Strömungsgeschwindigkeit 30 l/h) durch die Drainage 3.2 abgezogen. Die ablaufende Säure weist eine HCl-Konzentration von 4% auf und wird im Behälter 11 gesammelt. Anschliessend wird der Kationenaustauscher innerhalb von 30 Minuten mit 30 l vollentsalztem Wasser ausgewaschen. Das ablaufende Waschwasser wird zusammen mit dem durch Drainage 3.1 oder Rohr 9 entgegengeleiteten Wasser durch Drainage 3.2 abgezogen. Nach Beendigung des Waschvorgangs wird die Regeneriersäure aus Behälter 11 durch Drainage 3.1 über den Kationenaustauscher 7.1 geleitet. Anschliessend an das Regenerieren wird die Regeneriersäure durch Einleiten von Reinwasser durch Drainage 3.1 ausgewaschen. Aus dem Kationenaustauscher 7.1 ablaufendes Regeneriermittel und ablaufendes Waschwasser werden durch Rohr 9 abgeführt.

Das auf diese Weise regenerierte Filter wird zur Entsalzung von Trinkwasser verwendet. Das Trinkwasser weist die im Beispiel 1 angegebenen Werte auf und wird mit einer Geschwindigkeit von 300 l/h von unten nach oben durch das Filter geleitet. Das Beladen wird beendet, sobald der Restkieselsäuregehalt in dem durch Rohr 10 entnommenen entsalzten Wasser auf 0,1 mg $SiO_2$/l angestiegen ist. Das durch Rohr 10 entnommene Reinwasser weist während des gesamten Beladungsvorganges eine Leitfähigkeit von 0,2 Mikrosiemens/cm, eine Natriumkonzentration von 0,01 mg/l und einen Restkieselsäuregehalt von 0,02 mg/l auf.

Beispiel 6

Aus dem in Beispiel 5 beschriebenen Filter wird die Inertmaterialschicht 4.1 nebst Drainage 3.1 entfernt. Die untere Kammer wird mit 8,5 l eines makroporösen starkbasischen Anionenaustauschers, die mittlere Kammer mit 11,6 l eines starksauren Kationenaustauschers und die oberste Kammer mit 9,5 l eines schwachbasischen Anionenaustauschers beschickt. In der unteren Kammer beträgt der Freiraum zwischen Anionenaustauscherbett-Oberkante und Düsenboden etwa 300 mm; er wird für das notwendige Rückspülen des Harzes freigehalten.

Zum Betriebsbereitmachen des Filters wird dieses regeneriert. Das Regenerieren beginnt mit dem in der obersten Kammer befindlichen schwachbasischen Anionenaustauscher. Durch diesen werden aus Rohr 10 24 l 2%ige Natronlauge geleitet; und an der Drainage 3.2 zusammen mit dem durch Rohr 9 durch den starkbasischen Anionenaustauscher und starksauren Kationenaustauscher entgegengeleiteten Wasserstrom (Strömungsgeschwindigkeit 30 l/h) abgezogen. Das Auswaschen der Regenerierlauge erfolgt in gleicher Weise, d.h. das Waschwasser wird durch Rohr 10 eingeleitet und zusammen mit dem durch Rohr 9 entgegengeschickten Wasserstrom durch Drainage 3.2 abgeleitet.

Anschliessend werden zum Regenerieren des Kationenaustauschers 10,6 l 6%ige Salzsäure durch Drainage 3.2 eingeleitet und nach Durchströmen des Kationenaustauschers und des in der untersten Kammer befindlichen Anionenaustauschers durch Rohr 9 abgeleitet. Das Auswaschen mit entsalztem Wasser erfolgt in gleicher Weise wie das Regenerieren mit der Säure. Es wird ausgewaschen, bis der Gehalt an freier Säure im ablaufenden Waschwasser 3 mmol/l beträgt. Dies ist nach Durchleiten von 95 l Wasser erreicht. Nun wird durch das Filter von unten nach oben Wasser mit einer Geschwindigkeit von 200 l/h durchgepumpt, bis die Leitfähigkeit in dem bei 10 ausfliessenden Wasser unter 50 Mikrosiemens/cm gefallen ist. Dieser Wert wird nach 30 Minuten erreicht.

Das auf diese Weise betriebsbereit gemachte Filter wird zum gleichzeitigen Entfärben und Entsalzen einer Roh-Glukoselösung verwendet. Zu diesem Zweck wird die Lösung der Rohglukose (Konzentration an Glukose 30 Gew.-%) mit einer Geschwindigkeit von 100 l/h von unten nach oben durch das Filter geleitet. Solange die Leitfähigkeit der bei 10 austretenden Lösung 200 Mikrosiemens/cm nicht übersteigt, beträgt der Gehalt der Lösung an Farbstoffen und Salzen nur 5% des ursprünglichen Farbstoff- und Salzgehaltes.

In den bislang für die gleichzeitige Entfärbung und Entsalzung solcher Zuckerlösungen verwendeten Gleichstrom-Filteranlagen, in denen die Harze in getrennten Filtern untergebracht sind, beträgt der Regeneriermittelbedarf für die gleichen Harzmengen und Harztypen 38 l 2%ige Natronlauge, 19 l 6%ige Salzsäure und als Abfalllösungen fallen 17 l Lösung an, die 1,7 kg Kochsalz und 340 g NaOH enthalten. Das heisst, die bislang verwendeten Filter erfordern einen Regeneriermittelüberschuss von 80% an Salzsäure und 60% an Natronlauge verglichen mit dem in dem erfindungsgemässen Filter verwendeten Regeneriermittelüberschuss.

**Patentansprüche**

1. Gegenstrom-Adsorptionsfilter zur Behandlung von Flüssigkeiten mit verschiedenen, unterschiedliche Regeneriermittel erfordernden Adsorptionsmitteln in dem das Beladen der verschiedenen Adsorptionsmittel im aufwärts gerichteten Flüssigkeitsstrom und das Regenerieren der verschiedenen beladenen Adsorptionsmittel mit den unterschiedlichen Regeneriermitteln im abwärts gerichteten Flüssigkeitsstrom erfolgt, dadurch gekennzeichnet,

a) dass der Innenraum des Filters durch horizontale, flüssigkeitsdurchlässige Vorrichtungen in eine der Anzahl der zu verwendenden verschiedenen Adsorptionsmittel entsprechende Zahl von Kammern unterteilt ist;
b) dass sich in aneinandergrenzenden Kammern Adsorptionsmittel befinden, die mit unterschiedlichen Regeneriermitteln regeneriert werden;
c) dass die Kammern – mit Ausnahme der obersten Kammer – mit einem Flüssigkeitsableitungssystem ausgerüstet sind, das unter der die Kammer nach oben begrenzenden flüssigkeitsdurchlässigen Vorrichtung angebracht und in eine Schicht aus Inertmaterial eingebettet ist; und
d) dass die Menge an Adsorptionsmittel (in Vol.-%) in den einzelnen Kammern 50 bis 98% des freien Kammervolumens beträgt.

2. Gegenstrom-Adsorptionsfilter gemäss Anspruch 1, dadurch gekennzeichnet, dass es mit 2, 3 oder 4 verschiedenen Adsorptionsmitteln betrieben wird und sein Innenraum dementsprechend durch 1, 2 oder 3 flüssigkeitsdurchlässige Vorrichtungen in 2, 3 bzw. 4 Kammern unterteilt ist.

3. Gegenstrom-Adsorptionsfilter gemäss Ansprüchen 1 und 2, dadurch gekennzeichnet, dass das Flüssigkeitsableitungssystem im obersten Fünftel der Kammer angebracht ist.

4. Gegenstrom-Adsorptionsfilter gemäss Ansprüchen 1 und 2, dadurch gekennzeichnet, dass das Flüssigkeitsableitungssystem im obersten Siebtel der Kammer angebracht ist.

5. Gegenstrom-Adsorptionsfilter gemäss Ansprüchen 1 bis 4, dadurch gekennzeichnet, dass die Menge an Adsorptionsmittel in den einzelnen Kammern 60 bis 95% des freien Kammervolumens beträgt.

6. Gegenstrom-Adsorptionsfilter gemäss Ansprüchen 1 bis 4, dadurch gekennzeichnet, dass die Menge an Adsorptionsmittel in den einzelnen Kammern 75 bis 95% des freien Kammervolumens beträgt.

7. Gegenstrom-Adsorptionsfilter gemäss Ansprüchen 1 bis 6, dadurch gekennzeichnet, dass als Inertmaterial Polyethylen-, Polypropylen- oder Polystyrolgranulat verwendet wird.

8. Verfahren zum Betreiben des Gegenstrom-Adsorptionsfilters gemäss Ansprüchen 1 bis 7, dadurch gekennzeichnet, dass man in der Beladungsphase den zu behandelnden Flüssigkeitsstrom von unten nach oben durch die mit den verschiedenen Adsorptionsmitteln gefüllten, übereinander angeordneten Kammern des Filters leitet und anschliessend die beladenen Adsorptionsmittel kammerweise in der Weise regeneriert, dass man Regeneriermittel und Waschwasser von oben in die Kammer, deren Adsorptionsmittel regeneriert werden soll, einleitet und verbrauchtes Regeneriermittel bzw. Waschwasser durch das Flüssigkeitsableitungssystem der darunterliegenden Kammer gleichzeitig mit einem von unten nach oben durch eben diese darunterliegende Kammer geleiteten, dem Regeneriermittel- bzw. Waschwasser-Strom entgegengerichteten Wasserstrom abzieht.

9. Verfahren gemäss Anspruch 8, dadurch gekennzeichnet, dass man den dem verbrauchten Regeneriermittel bzw. Waschwasser entgegenzuleitenden Wasserstrom mit einer solchen Geschwindigkeit einleitet, dass in dem Raum unter der Inertmaterialschicht, in die das Flüssigkeitsableitungssystem eingebettet ist, keine Schlierenbildung auftritt.

**Patent Claims**

1. Counter-current adsorption filter for the treatment of liquids with different adsorbents which require different regenerating agents, in which loading of the different adsorbents is effected in a stream of liquid flowing upwards and regeneration of the different loaded adsorbents with the different regenerating agents is effected in a stream of liquid flowing downwards, characterised

a) in that the inside of the filter is subdivided, by horizontal devices which are permeable to liquid, into a number of chambers corresponding to the number of different adsorbents to be used;
b) in that adsorbents which are regenerated with different regenerating agents are present in adjacent chambers;
c) in that the chambers – with the exception of the topmost chamber of the filter – are equipped with a liquid drainage system which is located below the device which is permeable to liquid and forms the upper boundary of the chamber, and which is embedded in a layer of inert material; and
d) in that the amount of adsorbent (in % by volume) in the individual chambers is 50 to 98% of the free volume of the chamber.

2. Counter-current adsorption filter according to Claim 1, characterised in that it is operated with 2, 3 or 4 different adsorbents and its inside is accordingly sub-divided into 2, 3 or 4 chambers by 1, 2 or 3 devices which are permeable to liquid.

3. Counter-current adsorption filter according to Claims 1 and 2, characterised in that the liquid drainage system is located in the upper fifth of the chamber.

4. Counter-current adsorption filter according to Claims 1 and 2, characterised in that the liquid drainage system is located in the upper seventh of the chamber.

5. Counter-current adsorption filter according to Claims 1 to 4, characterised in that the amount of adsorbent in the individual chambers is 60 to 95% of the free volume of the chamber.

6. Counter-current adsorption filter according to Claims 1 to 4, characterised in that the amount of adsorbent in the individual chambers is 75 to 95% of the free volume of the chamber.

7. Counter-current adsorption filter according to Claims 1 to 6, characterised in that polyethylene granules, polypropylene granules or polystyrene granules are used as the inert material.

8. Method of operating the counter-current adsorption filter according to Claims 1 to 7, characterised in that, in the loading phase, the stream of liquid to be treated is passed from the bottom upwards through the chambers of the filter which are filled with the different adsorbents and are arranged one on top of the other, and the loaded adsorbents are regenerated chamber by chamber by a procedure in which regenerating agent and washing water are introduced into the top of that chamber of which the adsorbent is to be regenerated, and spent regenerating agent and washing water are removed via the liquid drainage system of the underlying chamber simultaneously with a stream of water which flows in countercurrent to the stream of regenerating agent and washing water and is passed from the bottom upwards through this same underlying chamber.

9. Method according to Claim 8, characterised in that the stream of water to be passed in counter-current to the spent regenerating agent and washing water is passed in at a rate such that no schlieren formation occurs in the space below the layer of inert material in which the liquid drainage system is embedded.

## Revendications

1. Filtre à adsorption à contre-courant pour le traitement de liquides, avec différents adsorbants exigeant différents régénérants, dans lequel le chargement des différents adsorbants s'effectue dans le courant de liquide dirigé vers le haut, et dans lequel la régénération des différents adsorbants chargés s'effectue à l'aide des différents régénérants, dans le courant de liquide dirigé vers le bas, caractérisé

a) en ce que le volume intérieur du filtre est subdivisé par des dispositifs horizontaux laissant passer les liquides, en un nombre de chambres correspondant au nombre des différents adsorbants à utiliser;

b) en ce que se trouvent dans des chambres contiguës des adsorbants qui sont régénérés par des régénérants différents;

c) en ce que les chambres, à l'exception de la chambre supérieure, sont équipées d'un système de dérivation des liquides, lequel est installé en dessous du dispositif laissant passer le liquide et limitant la chambre vers le haut, et qui est incorporé dans une couche d'un matériau inerte; et

d) en ce que la quantité d'adsorbant (en %-volume) dans les différentes chambres est de 50 à 98% du volume libre de la chambre.

2. Filtre à adsorption à contre-courant selon la revendication 1, caractérisé en ce qu'il est exploité avec 2, 3 ou 4 adsorbants différents, et que son volume intérieur est subdivisé en conséquence en 2, 3 ou 4 chambres par 1, 2 ou 3 dispositifs laissant passer les liquides.

3. Filtre à adsorption à contre-courant selon les revendications 1 et 2, caractérisé en ce que le système de dérivation des liquides est installé dans le cinquième supérieur des chambres.

4. Filtre à adsorption à contre-courant selon les revendications 1 et 2, caractérisé en ce que le système de dérivation des liquides est installé dans le septième supérieur des chambres.

5. Filtre à adsorption à contre-courant selon les revendications 1 à 4, caractérisé en ce que la quantité d'adsorbant dans les différentes chambres est de 60 à 95% du volume libre de la chambre.

6. Filtre à adsorption à contre-courant selon les revendications 1 à 4, caractérisé en ce que la quantité d'adsorbant dans les différentes chambres est de 75 à 95% du volume libre de la chambre.

7. Filtre à adsorption à contre-courant selon les revendications 1 à 6, caractérisé en ce qu'on utilise en tant que matériau inerte un granulé de polyéthylène, de polypropylène ou de polystyrène.

8. Procédé d'utilisation du filtre à adsorption à contre-courant selon les revendications 1 à 7, caractérisé en ce que, dans la phase de chargement, on fait passer le courant de liquide à traiter, de bas en haut, à travers les chambres du filtre disposées les unes sur les autres et remplies des différents adsorbants, puis qu'on régénère l'adsorbant chargé, chambre par chambre, de telle façon que l'on introduise un régénérant et de l'eau de rinçage à partir du haut dans les chambres dont l'adsorbant doit être régénéré, et qu'on soutire le régénérant ou l'eau de rinçage usés par le système de dérivation des liquides de la chambre située en dessous, en même temps qu'un courant d'eau, dirigé à contre-sens du courant de régénérant ou d'eau de rinçage, dirigé de bas en haut à travers la chambre située juste en dessous.

9. Procédé selon la revendication 8, caractérisé en ce qu'on introduit le courant d'eau devant passer à contre-courant du régénérant ou de l'eau de rinçage usés à une vitesse telle qu'il n'y ait pas formation de zones dans l'espace situé en dessous de la couche du matériau inerte dans laquelle est incorporé le système de dérivation des liquides.

FIG. 1

FIG. 2